# EUROPEAN PATENT APPLICATION

(11) **EP 3 130 773 A1**
(43) Date of publication of application: **15.02.2017**
(21) Application number: 15777369.8
(22) Date of filing: 08.04.2015
(51) Int. Cl.: F01N 3/033, B01D 50/00, B01D 53/50, F01N 3/01, F01N 3/02, F01N 3/037, F01N 3/08, F01N 3/24

(54) **EXHAUST GAS TREATMENT DEVICE FOR MARINE DIESEL ENGINE THAT USES LOW-QUALITY FUEL CONTAINING HIGH CONCENTRATION OF SULFUR COMPONENT**

(30) Priority: 08.04.2014 JP 2014079715
(71) Applicant: Usui Kokusai Sangyo Kaisha Ltd., Shizuoka 411-8610 (JP)
(72) Inventor: FURUGEN, Munekatsu, Nishinomiya-shi Hyogo 662-0875 (JP); MAKINO, Tadashi, Takatsuki-shi Osaka 569-1020 (JP); TAKAHASHI, Teruhisa, Sunto-gun Shizuoka 411-8610 (JP); TAKIKAWA, Kazunori, Numazu-shi Shizuoka 410-0037 (JP)
(74) Representative: Hoppe, Lars
(86) International application number: PCT/JP2015/060982
(87) International publication number: WO 2015/156320

(57) **Abstract**

Provided is an exhaust gas treatment equipment for a marine diesel engine capable of providing high PM collecting rate and a PM burning process in the ship. The exhaust gas treatment equipment includes: a tubular collection unit composed of a discharge electrode for charging particulate matters contained in exhaust gas from the engine and a precipitation electrode for collecting the particulate matters charged; a PM-low-concentration exhaust gas delivery pipe and a PM-high-concentration exhaust gas delivery pipe; a PM-free scrubber provided in the PM-low-concentration exhaust gas delivery pipe; a precipitation means for separating and collecting the particulate matters detached from the tubular collection unit by using a cyclone for precipitation; a burning device for burning PM precipitated by the precipitation means; and a recirculation pipe for recirculating combustion exhaust gas generated in the burning device to the collection unit or an exhaust pipe on the upstream side of the collection unit.

## Description

### Technical Field

The present invention relates to an exhaust gas treatment technique for a large-displacement marine diesel engine using low-quality fuel such as fuel oil particularly containing high-concentration sulfur components [while fuel oil is represented as Diesel Oil (DO), Marine Diesel Fuel (MDF) or Marine Diesel Oil (MDO), Marine Fuel Oil (MFO), Heavy Fuel Oil (HFO), and Residual Fuel Oil (RFO) in ship industries, these representations are hereinafter collectively referred to as fuel oil (Diesel Oil) in the present invention] for ships, electric power generation, industries, and so forth, the treatment for removing harmful gas, such as sulfur oxides, contained in exhaust gas of a marine diesel engine for purification. In particular, the present invention relates to an exhaust gas treatment equipment in a large-displacement marine diesel engine that discharges high-temperature exhaust gas in which PM is collected from exhaust gas so as to allow the engine to be driven continuously for a long period of time and to voyage continuously, and a device for burning the collected PM inside the ship is disposed.

### Background Art

As a motive power source for various ships, electric power generators, large construction machines and, furthermore, various automobiles, and so forth, diesel engines have been widely adopted. Particulate matter (hereinafter referred to as "PM") mainly including carbon, sulfur oxides (hereinafter referred to as "SOx") and nitrogen oxides (hereinafter referred to as "NOx") contained in exhaust gas discharged from the diesel engines not only cause air pollution as well known but also are substances extremely hazardous to human bodies. Therefore, purification of the exhaust gas is extremely important. Thus, many suggestions have already been made, such as an improvement of a diesel engine combustion scheme, adoption of various exhaust gas filters, an exhaust gas recirculation (hereinafter referred to as "EGR") method, the selective catalytic reduction (hereinafter referred to as "SCR") process, and an electrical treatment method using corona discharge, and some of such suggestions have been partially put to practical use.

Here, PM (particulate matter) components in exhaust gas of a diesel engine are classified into two, that is, soluble organic fractions (hereinafter referred to as "SOF") and insoluble organic fractions (hereinafter referred to as "ISF"). Of these, the SOF components are mainly composed of unburned ones of fuel and lubricant oil, including harmful substances such as carcinogenic polycyclic aromatics. On the other hand, the ISF components are mainly composed of low-electrical-resistivity carbon (soot) and sulfate components. Due to influences of these SOF components and ISF components on human bodies and environments, exhaust gas is desired to be reduced as much as possible. In particular, the degree of adverse effects of PM on living bodies are particularly problematic when the particle diameter is of a nanometer size.

As the electrical treatment method using corona discharge, for example, a method and device described below (Patent Literatures 1, 2 and 3) have been proposed.

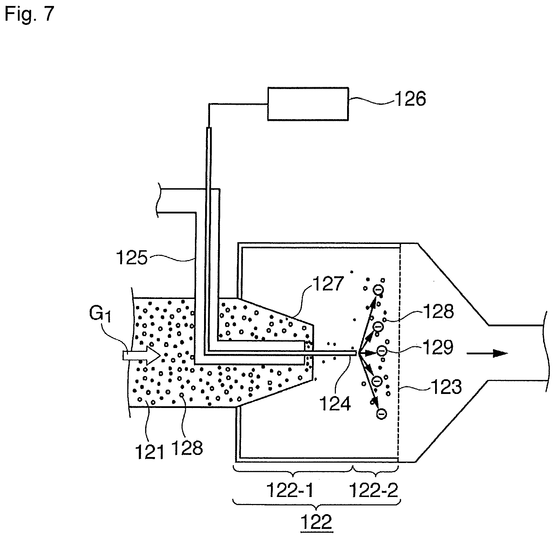

In Patent Literature 1, as schematically described in Figure 7, the Applicant has suggested an electrical treatment device for exhaust gas of a diesel engine, wherein a discharging/charging unit 122 formed of a corona discharging unit 122-1 and a charging unit 122-2 is installed on an exhaust gas passage 121 to charge PM 128 mainly composed of carbon in exhaust gas G1 with corona-discharged electrons 129, and the charged PM 128 is collected by a collection plate 123 disposed in the exhaust gas passage 121, the device having the configuration is such that an electrode needle 124 in the discharging/charging unit 122 has a short length in a flowing direction of an exhaust gas flow, and the collection plate 123 is disposed in a direction perpendicular to the flowing direction of the exhaust gas flow. In Figure 7, the reference numeral 125 denotes a seal gas pipe, 126 denotes a high-voltage power supply device, and 127 denotes an exhaust gas induction pipe.

Also, in Patent Literature 2, as schematically shown in Figure 8(A), the Applicant has preliminarily suggested an electrical treatment device for exhaust gas of a diesel engine in which the cyclone collection means 132-1 is constituted by two tangent-type cyclones 132-1a. This device is configured such that to a PM-high-concentration exhaust gas delivery unit 131-1b of a collection pipe 131-1, two tangent-type cyclones 132-1a are connected in parallel with each other through communication pipes 135-1 and 135-2 to form a cyclone collection means 132-1, and discharge pipes 136-1 and 136-2 for use in allowing purified gas after passing through the respective tangent-type cyclones 132-1a to join to a PM-low-concentration exhaust gas flowing through a PM-low-concentration exhaust gas delivery pipe 133 are also formed. More specifically, the electrical treatment device for exhaust gas is mainly classified into the tubular collection unit 131 forming electric precipitation means and the separating and collecting unit 132 forming separating and collecting means, and the tubular collection unit 131 for collecting PM particles is provided with a collection pipe 131-1 having a collection wall surface 131-K with a predetermined length and forming a precipitation electrode and an discharge electrode 131-2 for charging PM contained in exhaust gas. The collection pipe 131-1 forming the precipitation electrode is provided with an exhaust gas introduction inlet 131-1a on the tip of the upstream side (diesel engine side), a PM-low-concentration exhaust gas delivery pipe 133 near a shaft center on the downstream side and a PM-high-concentration exhaust gas delivery unit 131b near the inner peripheral surface of the end on the downstream side, which are respectively installed side by side. The discharge electrode 131-2 is provided with a main electrode 131-2a that extends over the entire length of the collection pipe 131-1 forming the precipitation electrode, and a group of electrode needles 131-2b that protrude radially and are disposed on the main electrode with predetermined intervals. The discharge electrode 131-2 constituted in this manner has its two ends of the main electrode 131-2a supported by support members 134 vertically installed on a seal air introduction pipe unit 131-1c formed on the exhaust gas introduction inlet 131-1a side of collection pipe 131-1 and a seal air introduction pipe unit 131-1 formed on the inlet portion of the PM-low-concentration exhaust gas delivery pipe 133. Reference numeral 137 represents a flow-rate control damper.

Furthermore, in Patent Literature 3, as schematically shown in Figure 9, the Applicant has preliminarily suggested an exhaust gas treatment equipment for a diesel engine of a recirculation system using cyclones. This device relates to an exhaust gas treatment equipment for a marine diesel engine provided with an discharge electrode 141-2 for charging particulate matter contained in exhaust gas of a marine diesel engine using a fuel having a lower quality than fuel oil, and a tubular collection unit 141-1 forming a precipitation electrode for collecting the particulate matter charged, and a separating and collecting means of a cyclone system for selectively collecting the particulate matter separated from the tubular collection unit 141-1, and in a pipe from a PM-high-concentration exhaust gas delivery unit 141-1b for the particulate matter formed near the inner peripheral surface on the downstream side of the tubular collection unit 141-1, a cyclone collection means 142-1 constituted by a tangent-type cyclone 142-1a is formed, and in this system, by introducing a PM-high-concentration exhaust gas flow discharged by the PM-high-concentration exhaust gas delivery unit 141b into the tangent-type cyclone 142-1a, large-diameter particles are collected and treated, and to an exhaust gas flow containing small-diameter particles that have not been removed by the cyclone, kinetic energy is applied by a blower 147 so that the gas flow is pressure-raised and speed-increased, and then pressure-fed and recirculated to the introduction pipe (exhaust pipe) 141-1a via the recirculation pipe 142-2. In the Figure, reference numeral 141-1a represents the exhaust gas introduction inlet, 141-1c and 143-1 represent seal air introduction pipe units, 141-2a represents the main electrode, 141-2b represents the electrode needle, 143 represents the PM-low-concentration exhaust gas delivery pipe, 144 represents the support member of the main electrode, and 148 represents the flow rate control dumper.

On the other hand, in Non-Patent Literature 1, in Chapter 3 "Requirements for machinery spaces of all ships", Part C "Control of discharge of oil", Regulation 15 "Control of discharge of oil", A. "Discharges outside special sea areas", .2 "Any discharge into the sea of oil or oily mixtures from ships of 400 gross tonnage and above shall be prohibited except when all the following conditions are satisfied", it is defined in .3 that "the oil content of the oily mixture without dilution does not exceed 15 parts per million". In B. "Discharges in special sea areas", .3 "Any discharge into the sea of oil or oily mixtures from ships of 400 gross tonnage and above shall be prohibited except when all the following conditions are satisfied", it is defined in .3 that "the oil content of the oily mixture without dilution does not exceed 15 parts per million".

Note herein that "oil" refers to crude oil, fuel oil, and lubricant, "oily" is supposed to be interpreted according to this meaning, and "oily mixtures" refers to mixtures containing oil.

Also, in the marine diesel engine described in Non-Patent Literature 2, by recirculating EGR gas diverted from exhaust gas to intake air, it is possible to reduce NOₓ by 80% from the exhaust gas and remove SOₓ nearly 100% from the EGR gas.

Moreover, Non-Patent Literature 3 has introduced a technology, as an example of SOₓ-compliant technology using a two-stroke engine made by MAN B&W with an output of 21,000 kW equipped on Ficaria Seaways of Demark by Alfa Laval, in which, by a treatment by a scrubber for exhaust gas using seawater or fresh water depending on the situation while fuel oil with a sulfur content of 2.2 percent is being used, cleaning and removal are performed to a level at the time of using fuel oil with a sulfur content of 0.1 percent in exhaust gas, which is a required level scheduled to come into force in 2015 by IMO (International Maritime Organization).

### Citation List

### Patent Literature

PTL 1: WO2006-064805A1
PTL 2: Japanese Patent Application Laid-Open No. 2012-107556
PTL 3: Japanese Patent Application Laid-Open No. 2013-238172

### Non-Patent Literature

NPTL 1: International Convention for Prevention of Pollution from Ships, 1973, Annex I "Regulation for prevention of pollution by oil"
NPTL 2: "Report on examination and research on reduction technique of air pollutants emitted from watercrafts", 2009 edited by The Japan Institute of Marine Engineering
NPTL 3: "Wave of clean solutions", Alfa Laval International Magazine "here" No. 30, pp. 6-14 issued on November 30, 2011

### Summary of Invention

### Technical Problem

However, the conventional diesel engine exhaust gas purification devices described above have the following problems and challenges.

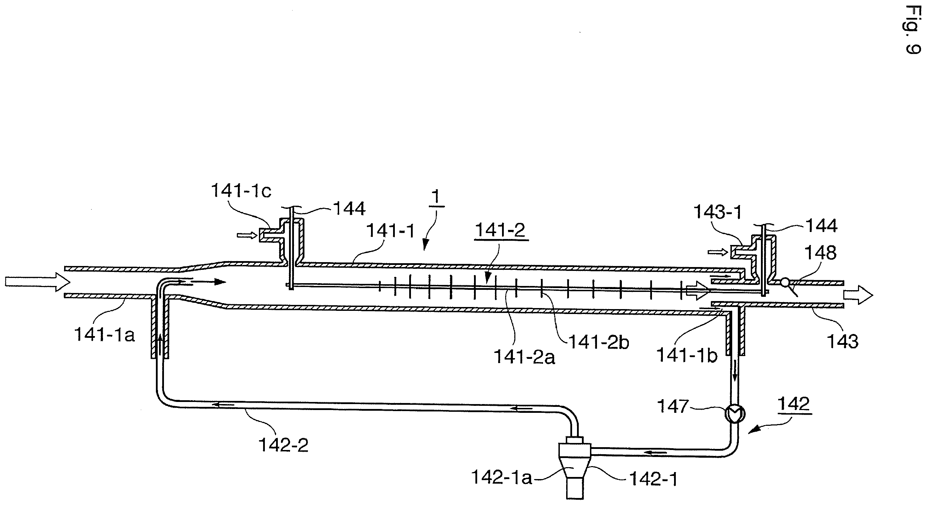

In the exhaust gas treatment technology for a diesel engine that electrically treats PM in exhaust gas using corona discharge or the like described in Patent Literature 1 (for example, an electrical treatment device for exhaust gas of a diesel engine depicted in Figure 9), the following problems arise.

That is, in marine diesel engines, for example, when the exhaust gas purification device described in Patent Literature 1 is used for a large-displacement marine diesel engine which has a significantly large displacement compared with automobile diesel engines using diesel fuel with less content of sulfur components and uses low-quality fuel such as fuel oil containing high-concentration sulfur components (fuel oil contains sulfur components 500 to 3500 times as much as diesel fuel: according to JIS K2204: 2007 "Diesel Fuel"; 0.0010 percent by mass or lower, K2205-1990 "Fuel Oil"; 0.5 percent by mass to 3.5 percent by mass or lower), it is required to overcome a problem in which the sulfur components in the low-quality fuel such as fuel oil containing high-concentration sulfur components are not only contained as SOF in exhaust gas and EGR gas but become sulfate, thereby corroding engine components, in particular, exhaust-related components, and another problem is raised in which SOₓ based on sulfur components cannot be collected at all, and no treatment unit has been disclosed so as to deal with a large amount of collected PM to be expected by continuously driving the engine and the electrical treatment device for the exhaust gas.

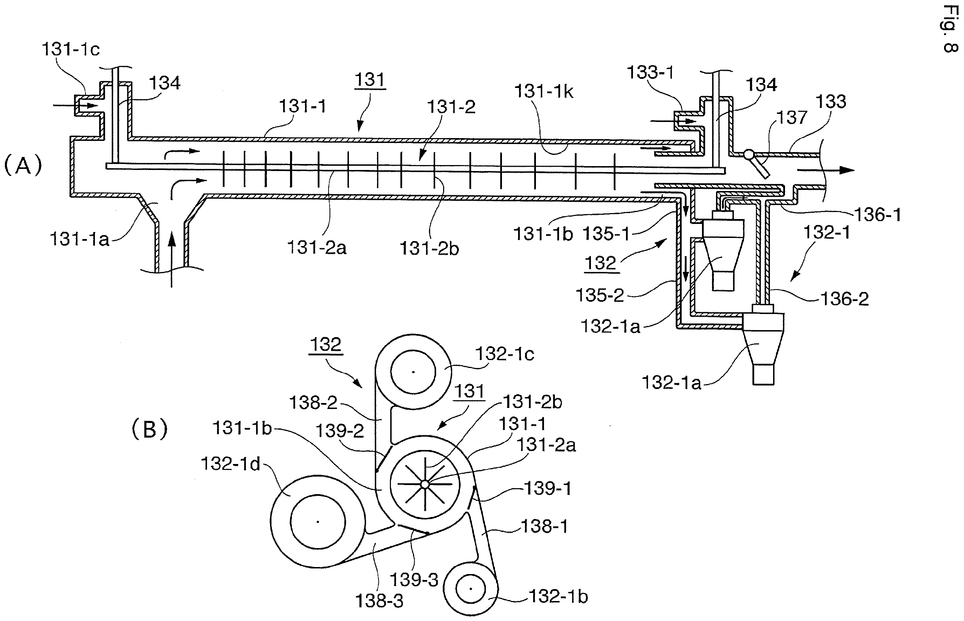

Also, in the gas treatment device depicted in Figure 8 and described in Patent Literature 2, as a separating and collecting unit 132, a complicated device, which is constituted by a tangent-type cyclone 132-1a depicted in Figure 8(A), or as depicted in Figure 8(B), a plurality of tangent-type cyclones having different treatment capabilities, such as, for example, a tangent-type cyclone 132-1b having a small treatment capability, a tangent-type cyclone 132-1c having a middle treatment capability and a tangent-type cyclone 132-1d having a large treatment capability of three kinds of cyclones, is used. In the Figure, reference numerals, 138-1, 138-2 and 138-3 represent communication pipes, and 139-1, 139-2 and 139-3 represent flow-rate control dumpers, respectively. Moreover, it is necessary to positively collect PM particles in the respective cyclones while controlling the flow rates of exhaust gas flowing into the respective cyclones to be optimized, and it is also necessary to positively lower the low-concentration of PM of the gas discharged from the respective cyclones, and to allow the diluted exhaust gas to join to the PM-low-concentration exhaust gas delivery pipe 133 through the exhaust gas discharge pipes 136-1 and 136-2. Moreover, in the same manner as in Patent Literature 1, no treatment unit has been disclosed so as to deal with a large amount of collected PM to be expected by continuously driving the engine and the exhaust gas treatment equipment.

Moreover, in the case of a diesel engine exhaust gas treatment equipment of a recirculation system depicted in Figure 9 and described in Patent Literature 3 also, no treatment unit has been disclosed so as to deal with a large amount of collected PM to be expected by continuously driving the engine and the exhaust gas treatment equipment, and since it is necessary to store a large amount of PM collected by the cyclones or the like inside the ship until the ship has arrived at a port having a PM treatment facility as a port facility, with the result that problems are raised in that a large space for the storage of a large amount of PM is required inside the ship, cargoes are reduced due to the reduction of the number of ship cabins, and subsequent increase in various costs.

On the other hand, in Non-Patent Literature 1, as described earlier, discharge regulations outside special sea areas, that is, prohibitions of discharge into the ocean of oil or oily mixtures are defined, or regulations on oil concentration or the like of oily mixtures without dilution are defined, and these are applied in the same manner to the substance that contains PM.

Also, in the marine diesel engine described in Non-Patent Literature 2, by recirculating EGR gas diverted from exhaust gas to intake air, it is possible to reduce NOₓ by 80% from the exhaust gas and remove SOₓ nearly 100% from the EGR gas. However, regarding the influence of soot and dust passing through the scrubber and sulfur components still contained in PM on the diesel machine body and the system, it is required not only to perform an actual ship test for a long period of time but also to prevent wash water discharged outboard from the scrubber from influencing the environment and ecosystem. In particular, regarding this wash water of the scrubber, waste water treatment is expected to become a large problem, such as removal of environmental pollution components or ecosystem influential components and pH adjustment, together with dissolution and floating of PM, dissolution of SO₂, and so forth. That is, even if PM is removed from the ERG gas, no PM is removed from the exhaust gas, and no technical idea for treating the collected PM can be seen.

In "Wave of clean solutions" described in Non-Patent Literature 3, "new clean technologies contribute to the shipping industry to reduce its environmental impact and meet stricter legislation for pollution at sea", and description goes as follows.

### Summary (I) Technical Background

### (I) IMO extends regulations for ship pollution

### (a) Sulfur oxides (SOₓ) (applied both to newly built and existing vessels)

Worldwide regulations with limits for the maximum sulfur concentration of the fuel oils are applied. Stricter regulations are applied to in emission control sea areas. These limits are subject to a series of step changes starting in 2012. The alternative to using low-sulfur fuel is to equip exhaust gas purification equipment to reach the levels.

### (b) Nitrogen oxides (NOₓ) (applied only to newly built vessels)

Existing regulation requirements are applied to installed marine diesel engines of not less than 130 KW output power. Different levels of control apply based on the ship construction date. To new ships travelling the emission control sea area, stricter regulations (Tier III) will apply from 2016.

### (c) Bilge water (applied both to newly built and existing vessels)

Bilge water overboard limit is 15 ppm.

### Summary (II) Water treatment technology

### (II) Alfa Laval's water treatment technology

(a) The Pure Bilge solution for treating only oily waste water in a vessel's bulge tank uses a single-stage high-speed centrifugal separation system to purify large water volumes without the use of chemicals, adsorption filters or membranes, and the oil-in-water content is set to less than 5 ppm.
(b) To enable ships to reach IMO demands for a reduction in NOₓ emissions of 80 percent, Alfa Laval is collaborating with MAN Diesel to develop an exhaust gas recirculation (EGR) system for large two-stroke diesel engines.
(c) On SOₓ emissions, Alfa Laval has developed a complete exhaust gas purification process. The system, which is currently undergoing onboard tests, also uses Alfa Laval separators to purify the dirty water coming from the scrubber before it is released into the ocean.

### Summary (III) SOₓ-compliant technology

### (III) Alfa Laval's SOₓ-compliant technology

Equipped on (Ficaria Seaways (Denmark) = output of 21,000 kW, MAN B&W two-stroke engine)
(a) The fuel is fuel oil with a sulfur content of 2.2 percent, and the exhaust gas is washed and removed so that the sulfur content is brought down to the 0.1 percent level demanded by IMO (International Maritime Organization) regulations that come into force in 2015.
(b) Alfa Laval's Pure SOₓ can use one of both seawater and freshwater depending on the situation.

"Using water, either seawater or freshwater mixed with caustic soda and water solution, the scrubber washes the exhaust gas from the main engine"
- In the first stage, water is injected at a gas introduction portion to cool exhaust gas, and the majority of the soot and dust in the exhaust gas are removed here.
- In the second stage, sulfur oxides and others in the exhaust gas are further washed in a scrubber tower. To prevent water droplets in the exhaust gas from being carried away and corrosion, the water droplets in the gas are removed by a demister before being discharged through from the funnel.
- In the third stage, sulfur dioxides remaining in the exhaust gas are further purified. To prevent condensation and corrosion, small water droplets are removed from the exhaust gas before being discharged from the funnel of the ship (98 percent or more of sulfur components of the exhaust gas is removed).

From the description "It can be simply described as a big shower cabinet placed in the funnel of the ship," on line 16 in the second column to line 1 in the third column on page 12 of this Non-Patent Literature 3, the description "The scrubber equipped with the funnel of the ship can be described as a big shower cabinet," in a note in the photograph on page 14, and water and seawater being supplied from an upper portion of the scrubber of a hybrid system diagram (not depicted) and discharged together from a lowermost portion and the exhaust gas being supplied from a bypass dumper to a lower portion of the scrubber and discharged to the funnel directly coupled to an uppermost portion, it can be found that the technology is of a jet scrubber type. That is, it can be found that the technology is a type in which exhaust gas fiercely collides with the surface of scrubber treatment water and has a function capable of also removing particle components in the exhaust gas together with gaseous components. Therefore, for post treatment of scrubber treatment water, it is required to prepare each structure and device described in the hybrid system diagram (not depicted) and operate and run these in a sophisticated manner. Moreover, in Non-Patent Literature 3, no PM is collected at all in the sea water mode (on line 16 in the fourth column to line 1 in the fifth column on page 12).

Still further, as a known NOₓ reduction technology, the SCR scheme using catalytic reaction has been generally known. In this SCR scheme, in the state in which the temperature of exhaust gas of the engine is sufficiently high, if the catalyst is activated, and if the surface of the catalyst is reliably exposed without being covered with soot or the like, the catalyst functions normally and a high degree of NOₓ reduction can be achieved. However, in a general marine engine, a low-speed engine with a long stroke is in the mainstream, compared with an automobile engine or the like, in order to ensure an improvement in specific fuel consumption. It is often the case that energy of combustion gas in a cylinder is slowly and reliably taken out as motive power for a long time and the temperature of exhaust gas is low due to heat dissipation together with a contact of the combustion gas with the wall surface of the cylinder or the like over a long period of time. Not only during warm-up immediately after the start of the engine but also during steady operation, if the temperature of the catalyst becomes below 300 degrees Celsius, it is often the case that the catalyst does not sufficiently exert its functions and the NOₓ reduction ratio is insufficient. Moreover, in an exhaust purification system of the SCR scheme for a diesel engine using low-quality fuel equivalent to or lower than fuel oil containing high-concentration sulfur components, a problem is pointed out that the catalyst is covered with PM contained in the exhaust gas and the catalyst is poisoned by sulfur contained in the fuel in large quantity, thereby preventing its NOₓ purifying function from stably functioning over a long period of time. As improvement measures, it is desired to remove sulfur from the low-quality fuel equivalent to or lower than fuel oil containing high-concentration sulfur components. However, desulfurization has not yet been achieved because soaring fuel price with enormous capital investment associated with installation of large-scale desulfurizing device to an oil refinery is expected, while the SCR scheme does not contribute to PM reduction in the exhaust gas.

In view of the above-described problems in the conventional technology, the present invention is to provide a technology by which PM in exhaust gas of a large-displacement marine diesel engine which particularly uses low-quality fuel such as fuel oil containing high-concentration sulfur components and from which high-speed and/or large-flow-rate exhaust gas is discharged, is collected by using ESP/C/PDF and the collected PM is burned and treated inside the ship. Thanks to the burning of the collected PM inside the ship, all the PM collected by cyclones needs not be stored in the ship until the ship has arrived at a port having a PM treatment facility as a port facility so that a large space for the storage is not required inside the ship, the number of ship cabins is not reduced and cargoes are not reduced, and it is possible to suppress an increase in costs, or preferably, by recirculating a combustion exhaust gas generated at the time of burning to the collection pipe so as to be again subjected to charging, adhering, coagulating and condensing processes so that the PM is positively collected, or by carrying out a scrubber treatment on a low-concentration discharged gas by a PM-free scrubber, or by carrying out a scrubber treatment on a combustion exhaust gas generated at the time of burning by a PM-free scrubber, or the like, PM is positively collected and removed from an exhaust gas to be discharged to the atmosphere and SOₓ is also positively removed so that a gas capable of maintaining environmental protection can be discharged; thus, it is possible to achieve the object of the present invention to provide an exhaust gas treatment equipment for a marine diesel engine using low-quality fuel such as fuel oil containing high-concentration sulfur components.

### Solution to Problems

An exhaust gas treatment equipment for a marine diesel engine using low-quality fuel such as fuel oil containing high-concentration sulfur components in accordance with the present invention includes: an electric precipitation means having a tubular collection unit with a predetermined length, the tubular collection unit being composed of a discharge electrode for charging particulate matters contained in exhaust gas from the engine and a precipitation electrode for collecting the particulate matters charged, the discharge electrode having a main electrode disposed inside the tubular collection unit in a pipe axial direction and a plurality of electrodes that radially protrude and are disposed on the main electrode with predetermined intervals; a PM-low-concentration exhaust gas delivery pipe and a PM-high concentration exhaust gas delivery pipe; a PM-free scrubber provided on the PM-low-concentration exhaust gas delivery pipe; a precipitation means for separating and collecting particulate matters detached from the tubular collection unit by using a cyclone for precipitation; a burning device for burning PM precipitated by the precipitation means; and a recirculation pipe for recirculating combustion exhaust gas generated by the burning device to the collection unit or an exhaust pipe on the upstream side of the collection unit, the recirculation pipe disposed between the burning device and the exhaust pipe located on the upstream side of the collection pipe or the upstream side of the collection unit.

Moreover, the device of the present invention is preferably provided with modes in which the recirculation pipe is disposed so as to recirculate combustion exhaust gas from the burning device to the upstream of the PM-free scrubber provided on the PM-low-concentration exhaust gas delivery pipe, and the recirculation pipe from the cyclone for precipitation and the PM combustion exhaust gas recirculation pipe are connected with each other, a lower portion of the cyclone for precipitation is formed as a PM storing stocker, and the PM burning device is integrally formed on the lower portion of the stocker with a shutter interposed therebetween.

Moreover, the device of the present invention preferably has modes in which a plurality of the stockers are used to be controlled so as to start a burning process of PM after the ship has proceeded to a sea area in which gas and scrubber treatment water can be discharged, and a selective shutter is attached to the burning device so as to successively carry out burning processes by opening/closing the shutter with time differences.

Additionally, the burning device preferably has a function in which by controlling temperature-raising and heating processes of a built-in heating-use heater (electric heater or the like) or a burner by a controller so that PM is burned.

### Advantageous Effects of Invention

An exhaust gas treatment equipment for a marine diesel engine using low-quality fuel such as fuel oil containing high-concentration sulfur components according to the present invention has the following functions and effects.

That is, PM in exhaust gas from a large-displacement marine diesel engine which particularly uses low-quality fuel such as fuel oil containing high-concentration sulfur components and from which high-speed and/or large-flow-rate exhaust gas is discharged is collected by an ESP/C/PDF and by burning the collected PM inside the ship, it becomes unnecessary to store all the PM collected by the cyclone inside the ship until the ship has arrived at a port having a PM treatment facility as a port facility so that a large space for the storage is not required inside the ship, the number of ship cabins is not reduced and cargoes are not reduced; therefore, it is possible to suppress an increase in costs, or preferably, a combustion exhaust gas generated at the time of burning is recirculated to the collection pipe, and charging, adhering, coagulating and condensing processes are again carried out so that the PM is positively collected, and by carrying out a scrubber treatment on a low-concentration discharged gas by a PM-free scrubber, SOₓ can be positively removed from an exhaust gas to be discharged to the atmosphere so as to discharge a gas capable of maintaining environmental protection, and moreover, since the treatment water of the PM-free scrubber contains high-concentration sulfur components, but contains hardly any organic solvent soluble components, discharge to the ocean is possible. Moreover, as an additional effect, the technique of the invention contributes to improvements of energy efficiency for a ship as a whole, by recovering thermal energy from gas in which PM is burned.

### Brief Description of Drawings

Figure 1(A) and Figure 1(B) show a device of a first example, Figure 1(A) is a schematic longitudinal cross-sectional view showing the entire structure of the device, and Figure 1(B) is a schematic longitudinal cross-sectional view showing an example of a structure in which an exhaust gas cooler is installed in an exhaust gas introduction pipe unit of the same device.
Figure 2 is a schematic longitudinal cross-sectional view showing an entire structure of a device of a second example of the present invention.
Figure 3 is a schematic longitudinal cross-sectional view showing an entire structure of a device of a third example of the present invention.
Figure 4 is a schematic longitudinal cross-sectional view showing an entire structure of a device of a fourth example of the present invention.
Figure 5 is a schematic longitudinal cross-sectional view showing an entire structure of a device of a fifth example of the present invention.
Figure 6 is a schematic longitudinal cross-sectional view showing an entire structure of a device of a sixth example of the present invention.
Figure 7 is a schematic view showing one example of a conventional diesel engine exhaust gas treatment equipment.
Figure 8(A) and Figure 8(B) are schematic views showing another example of the same conventional diesel engine exhaust gas treatment equipment, and Figure 8(A) is an entire block diagram, and Figure 8(B) is a schematic view showing a cyclone collection means.
Figure 9 is a schematic view showing another example of the same conventional diesel engine exhaust gas treatment equipment.

### Description of example

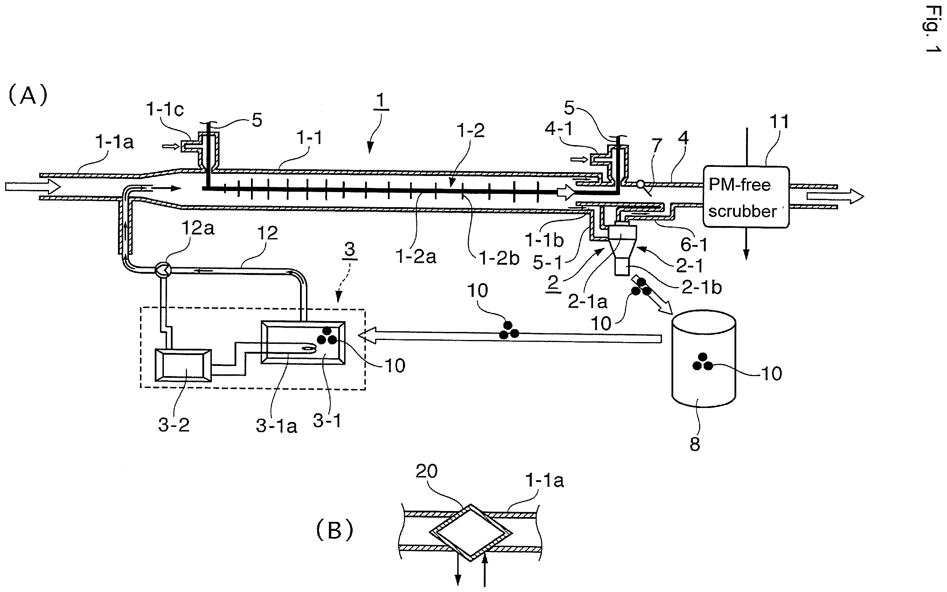

An exhaust gas treatment equipment for a marine diesel engine shown in Figures 1 (A) and 1 (B) as the device of the first example of the present invention is mainly classified to an electric precipitation unit 1, a separating and collecting unit 2 and a PM burning unit 3. The electric precipitation unit 1 to be installed for collecting PM particles is provided with a collection pipe 1-1 having a predetermined length and configuring a precipitation electrode, and a discharge electrode 1-2 for charging PM contained in exhaust gas. The collection pipe 1-1 configuring the precipitation electrode is provided with an exhaust gas introduction pipe 1-1a on the end portion on the upstream side thereof (on diesel engine side), with a PM-low-concentration exhaust gas delivery pipe 4 attached near the shaft center on the end portion on the downstream side thereof and a PM-high-concentration exhaust gas delivery pipe 1-1b attached to the inner peripheral surface of the end portion on the downstream side thereof being formed so as to be placed side by side. The discharge electrode 1-2 is constituted by a main electrode 1-2a that extends over substantially the entire length of the vicinity of the shaft center of the collection pipe 1-1 and a group of electrode needles 1-2b that protrudes radially and are disposed with predetermined intervals in the longitudinal direction of the main electrode 1-2a. The discharge electrode 1-2 configured in this manner has two ends of its main electrode 1-2a supported by support members 5 that are vertically formed on a seal air introduction pipe unit 1-1c formed on the exhaust gas introduction pipe 1-1a side of the collection pipe 1-1 and a seal air introduction pipe unit 4-1 formed on the inlet portion of the PM-low-concentration exhaust gas delivery pipe 4. Moreover, in the PM-low-concentration exhaust gas delivery pipe 4 for PM 10, by installing a PM-free scrubber 11 that removes SOₓ contained in exhaust gas, but hardly removes any PM by utilizing difference in diffusion speeds between gas and particles, SOₓ is removed from an exhaust gas to be discharged to the atmosphere.

Additionally, since scrubber treatment water removes SOₓ, but hardly removes any PM from the exhaust gas, a post treatment with scrubber treatment water as waste treatment water can be easily carried out. Moreover, the discharge electrode 1-2 is supported by stays (not shown) insulated from the inside of the collection pipe 1-1, if necessary, with predetermined intervals. Furthermore, the discharge electrode 1-2 is wired to a high-voltage power supply device (not shown) installed outside, and supplied with controlled high-voltage power.

The separating and collecting unit 2 formed on the downstream side of the electric precipitation unit 1 in the flowing direction of the exhaust gas is constituted by cyclone collection means 2-1 serving as separation means. This cyclone collection means 2-1 is constituted by a single tangent-type cyclone 2-1a connected to the PM-high-concentration exhaust gas delivery unit 1-1b the collection pipe 1-1 through a communication pipe 5-1, and between the tangent-type cyclone 2-1a and the PM-low-concentration exhaust gas delivery pipe 4, an exhaust pipe 6-1 for allowing a purified gas after passing through the tangent-type cyclone 2-1a to join into a PM-low-concentration exhaust gas flowing inside the PM-low-concentration exhaust gas delivery pipe 4 is disposed. Moreover, in the PM-low-concentration exhaust gas delivery pipe 4, a flow rate control dumper 7 for carrying out flow-rate adjustments on PM-high-concentration exhaust gas inflow rate and inflow speed into the tangent-type cyclone 2-1a and a PM-low-concentration exhaust gas discharge amount is installed.

Additionally, PM 10 precipitated by the tangent-type cyclone 2-1a is accumulated inside a detachable hopper 2-1b installed right below a cone-shaped portion on a lower portion of the tangent-type cyclone 2-1a and when a hopper capacity limit has been reached, the hopper is exchanged to new one and stored therein. In the drawing, reference numeral 8 represents a stocker for storing the PM 10.

A PM burning unit 3 to be installed to burn PM is controlled by a controller 3-2 in its burning temperature, flow rate, or the like of the exhaust gas, etc., and is constituted by a PM incinerator 3-1 having a built-in electric heater 3-1a. By further installing a recirculation pipe 12 for recirculating combustion exhaust gas from the PM incinerator 3-1 to the exhaust gas introduction pipe 1-1a of the electric precipitation unit 1 therein, even in the case when, for example, burning PM 10 inside the PM incinerator 3-1 temporarily scatters, flies or the like, thereby possibly being mixed into the combustion exhaust gas, the PM is positively removed by allowing it again to pass through the electric precipitation unit 1 and separating and collecting unit 2 so as to maintain environmental protection of the gas to be discharged to the atmosphere. In the drawing, reference numeral 12a represents a blower for applying kinetic energy to exhaust gas flow flowing inside the recirculation pipe 12. Moreover, the tip end of the recirculation pipe 12 is allowed to protrude into the exhaust gas introduction pipe 1-1a by taking an ejector effect into consideration, and the opening of the tip end is also bent to be directed to the exhaust gas outflow direction. Additionally, it is needless to say that the PM incinerator 3-1 may be an incinerator using a burner (not shown) in place of the electric heater 3-1a.

As described above, in the case of the exhaust gas treatment equipment having the configuration of Figure 1(A), almost all the PM 10 is collected by the tangent-type cyclone 2-1a, and after having been temporarily stored in the hopper 2-1b, the PM 10 inside the hopper 2-1b is further stored in a stocker 8 until the ship is brought into a state capable of carrying out a burning process of PM. The PM 10 stored in the stocker 8 is then supplied to the PM incinerator 3-1 of the PM burning unit 3, and by controlling the electric heater 3-1a in the incinerator by the controller 3-2 to raise the temperature of the electric heater 3-1a, the PM 10 is burned. A PM combustion exhaust gas containing high-concentration sulfur components generated upon burning the PM 10 is recirculated into the collection pipe 1-1 through the recirculation pipe 12 to be mixed with exhaust gas, and the mixed gas containing a high concentration of PM is led out to the tangent-type cyclone 2-1a so that an exhaust gas to be discharged to the atmosphere containing a high-concentration of sulfur components, but having a low-concentration of PM 10 is supplied to the PM-free scrubber 11. By the PM-free scrubber 11, the exhaust gas to be discharged to the atmosphere is formed into a gas in which the sulfur components are removed although the PM remains therein so that the atmospheric environment can be preserved. Additionally, since the treatment water from the PM-free scrubber 11 contains high-concentration sulfur components, but contains hardly any PM, the discharge into the ocean such as a scrubber through operation is possible, and the treatment can be carried out by using a small-sized treatment device with a small number of processes which is easily controlled.

Moreover in a device of a first example shown in Figure 1(A), an exhaust gas cooler 20 is installed in an exhaust gas introduction pipe 1-1a as shown in Figure 1(B) so that a PM combustion exhaust gas may be recirculated onto the downstream side of the exhaust gas cooler 20. In the case when the exhaust gas cooler 20 is installed in the exhaust gas introduction pipe 1-1a so as to preliminarily cool exhaust gas, if a PM-combustion exhaust gas is recirculated onto the downstream side of the exhaust gas cooler 20 of the exhaust gas introduction pipe 1-1a, since no PM combustion exhaust gas containing corrosive substances (sulfate combustion exhaust gas) flows into the exhaust gas cooler 20, it is not necessary to use high corrosion preventive members as members constituting the exhaust gas cooler 20 and durability can be easily ensured at low costs. Additionally, in the case when the PM combustion exhaust gas is recirculated to the upstream side of the exhaust gas cooler 20, since the entire amount of gas to flow into the collection pipe 1-1 can be preliminarily cooled, a high collecting rate can be ensured in the electric precipitation unit 1 and the separating and collecting unit 2.

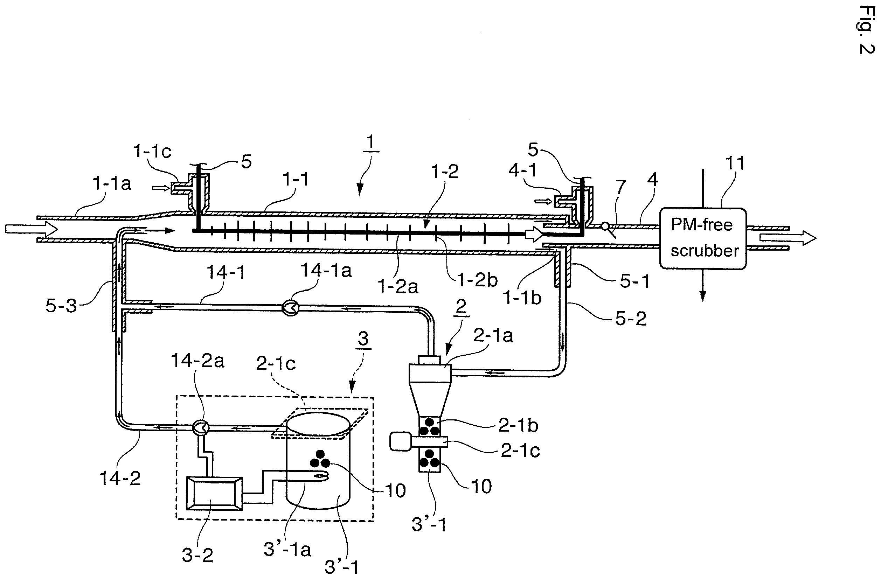

An exhaust gas treatment equipment for a marine diesel engine shown in Figure 2 as a device of a second example of the present invention has a configuration in which the diesel engine exhaust gas treatment equipment of a recirculation system that uses the cyclone of the device of the first example shown in Figure 1 and a PM burning device are combined with each other, and is provided with an discharge electrode 1-2 for charging particulate matters contained in exhaust gas of a marine diesel engine using low-quality fuel such as fuel oil or the like containing high-concentration sulfur components as its fuel, a tubular collection pipe 1-1 forming a precipitation electrode for collecting the charged particulate matters and separating and collecting means 2-1 of a cyclone system for separating and collecting the particulate matters separated from the tubular collection pipe 1-1, and the marine diesel engine exhaust gas treatment equipment is designed such that by installing a PM-free scrubber 11 that removes SOₓ contained in exhaust gas, but hardly removes any PM by utilizing difference in diffusion speeds between gas and particles in a PM-low-concentration exhaust gas delivery pipe 4 for PM 10, SOₓ is removed from an exhaust gas to be discharged to the atmosphere, and the marine diesel engine exhaust gas treatment equipment having the above-mentioned configuration is provided with cyclone collection means constituted by the same tangent-type cyclone 1-2a as described above in a PM-high-concentration exhaust gas pipe 5-2 from the PM-high-concentration exhaust gas delivery unit 1-1b formed near the inner peripheral surface on the downstream side of the tubular collection pipe 1-1, and has such a system that by introducing a PM-high-concentration exhaust gas flow discharged from the PM-high-concentration exhaust gas delivery unit 1-1b into the tangent-type cyclone 2-1a, large-diameter particles are collected and treated, while an exhaust gas flow containing small-diameter particles that have not been removed by the same cyclone is pressure-fed and recirculated into the exhaust gas introduction pipe 1-1 via a recirculation pipe 14-1.

On the other hand, the PM burning device is designed such that a hopper 2-1b is installed right below a corn-shaped portion right below the lower portion of the tangent-type cyclone 2-1a, and right below the hopper, a stocker 3'-1 that has an inner capacity larger than that of the hopper 2-1b and also serves as the PM incinerator, with a shutter 2-1c that holds PM precipitated and accumulated in the hopper and also allows the PM to drop down into the hopper being interposed therebetween. The stocker 3'-1 also serving as the PM incinerator is designed to have a built-in electric heater 3'-1a and control the burning temperature, the flow rate, etc. of the exhaust gas by the controller 3-2. Additionally, in the case of the stocker 3'-1 also serving as the PM incinerator, when PM is precipitated and accumulated inside the hopper 2-1b to reach the hopper capacity limit, the shutter 2-1c is opened to allow the PM to drop down the PM inside the stocker 3'-1 right below the hopper, and the shutter 2-1c is then closed to stock. A combustion exhaust gas from the stocker 3'-1 also serving as the PM incinerator is designed to be recirculated into the exhaust gas introduction pipe 1-1a of the electric precipitation unit 1 through the recirculation pipe 14-2. Moreover, the tip ends of the recirculation pipes 14-1 and 14-2 are also allowed to protrude into the exhaust gas introduction pipe 1-1a by taking an ejector effect into consideration in the same manner as in the aforementioned example, with the tip end openings being bent to be directed in the exhaust gas outflow direction. Reference numerals 14-1a and 14-2a respectively represent blowers for applying kinetic energy to exhaust gas flows respectively flowing through the recirculation pipes 14-1 and 14-2. Additionally, it is needless to say that in place of the electric heater 3'-1a, a burner (not shown) may be used.

In the case of the exhaust gas treatment equipment having the configuration shown in Figure 2, on the downstream of the collection pipe 1-1, a PM-high-concentration exhaust gas flow that has passed near an inner wall of the collection pipe is introduced to the tangent-type cyclone 2-1a through the communication pipe 5-1 and the PM-high-concentration exhaust gas pipe 5-2 by the PM-high-concentration exhaust gas introduction unit 1-1b of the collection pipe 1-1, where large-diameter PM particles are centrifuged to be separated, and collected and accumulated in the hopper 2-1b right below a cone shaped portion of a lower portion. After the collection and accumulation of the large-diameter PM particles in the tangent-type cyclone 2-1a, a substantially purified exhaust gas flow containing small-diameter PM particles that have not been removed by the tangent-type cyclone 2-1a is allowed to flow inside the recirculation pipe 14-1 and joined to the exhaust gas flow flowing inside the exhaust gas introduction pipe 1-1a through the communication pipe 5-3 on the upstream side, and at this time, kinetic energy is applied to the purified exhaust gas flow containing small-diameter PM particles by the blower 14-1a and pressure-raised and speed-increased as well as pressure-fed and recirculated into the exhaust gas introduction pipe 1-1a via the recirculation pipe 14-1. On the other hand, on the downstream side of the collection pipe 1-1, a PM-low-concentration exhaust gas flow flowing substantially near the center axis portion of the collection pipe 1-1 is allowed to pass through the PM-free scrubber 11 where SOx is removed, and is then discharged into the atmosphere. On the other hand, in the hopper 2-1b formed right under the cone-shaped portion of the tangent-type cyclone 2-1a of the PM burning unit, PM is precipitated and accumulated, and when a hopper capacity limit has been reached, the shutter 2-1c is opened to allow the PM to drop down into the stocker 3'-1 also serving as the PM incinerator. Thereafter, the shutter 2-1c is closed and the PM is burned and incinerated while controlling the burning temperature, intake air amount, flow rate of combustion exhaust gas, or the like by controlling the electric heater 3'-1a installed in the stocker 3'-1 by the use of the controller 3-2. Further, the combustion exhaust gas from the PM incinerator is recirculated to the exhaust gas introduction pipe 1-1a of the electric precipitation unit 1 via the recirculation pipe 14-1a2. Therefore, even in the case when, for example, PM burning inside the PM incinerator 3'-1 compatibly serving as the PM incinerator temporarily scatters, flies and the like, thereby possibly being mixed into the combustion exhaust gas, the PM is positively removed by allowing it again to pass through the electric precipitation unit 1 and separating and collecting unit 2 so as to maintain environmental protection of the gas to be discharged to the atmosphere.

In accordance with an exhaust gas treatment equipment having the configuration shown in Figure 2, functions and effects as described below can be obtained.
(A) An exhaust gas flow (recirculation gas) containing small-diameter particles, which has passed through the cyclone 2-1a, is recirculated, pressure-fed and mixed with an exhaust gas flow from an engine, and again subjected to repeating processes of discharging and charging of particles in the collection pipe 1-1, adhesion to inner wall surface of the collection pipe, and separation so as to be formed into large-diameter particles, which can be separated as a PM-high-concentration exhaust gas flow, and positively removed by the cyclone 2-1a.
(B) By recirculating the exhaust gas flow after having passed through the cyclone 2-1a, the collection rate of PM or the like in a discharged gas can be maintained or improved; that is, while maintaining or improving the cleanliness of a PM-low-concentration exhaust gas, by eliminating the necessity of installing a plurality of tangent-type cyclones having different treatment capabilities so as to deal with the exhaust gas flow rate that changes in driving states and load rates of the engine derived from parallel driving operations or single driving operation of a main machine and auxiliary machines in a marine engine, since the entire device is small-sized and made compact and the control of the device becomes simpler, it is possible to simplify the controlling software and device and consequently to provide a device having high reliability.
(C) By installing the blower 14-1a, since it becomes possible not only to smoothly recirculate a purified exhaust gas flow containing small-size PM particles to the exhaust gas introduction pipe 1-1a, even if, for example, the flowing resistance of the exhaust gas flow in the tangent-type cyclone 2-1a is slightly large, but also to appropriately control the inflow tangent velocity into the tangent-type cyclone 2-1a, and consequently to improve the collecting rate in the same cyclone. Additionally, the installation position of the blower 14-1a may be set to any position before or after the cyclone, and in the case of the blower installation position on the upstream side of the cyclone, it is possible to easily obtain a high collecting rate by maintaining the inflow tangent velocity to the cyclone at high level, while in the case of the installation position on the downstream side of the cyclone, since the suction resistance in the blower 14-1a is large, there is a slight concern of possible surging; however, since the adhesion of PM particles or the like onto a fan blade surface becomes less and the gas temperature is lowered, the durability of the blower 14-1a can be easily ensured.
(D) Since the tip ends of recirculation pipes 14-1 and 14-2 are allowed to protrude into the exhaust gas introduction pipe 1-1a, with the tip end openings being bent so as to be directed to the exhaust gas outflow direction, a recirculation flow to which kinetic energy is applied by the blower 14-1a so as to be pressure-raised and speed-increased is allowed to jet out to exert an ejector effect so that by sucking the exhaust gas flow flowing through the exhaust gas introduction pipe 1-1a, the exhaust gas resistance is reduced, and the engine efficiency can be improved.
(E) By burning PM inside the ship, a continuous voyage for a long period of time is possible.
(F) By recirculating an incinerator exhaust gas to the upstream side of the collection pipe, PM inside the incinerator exhaust gas can be positively removed.
(G) By installing the PM-free scrubber 11, SOₓ can be removed from an exhaust gas. Additionally, since the treatment water of the PM-free scrubber 11 contains high-concentration sulfur components, but contains hardly any PM, the discharge into the ocean such as scrubber through operation is possible, and the treatment can be carried out by using a small-sized treatment device with a small number of processes which is easily controlled.

Additionally, in the present example also, as shown in Figure 1(B), it is needless to say that the exhaust-gas cooler 20 is installed in the exhaust gas introduction pipe 1-1a and the PM combustion exhaust gas may be recirculated onto the downstream of the exhaust gas cooler 20.

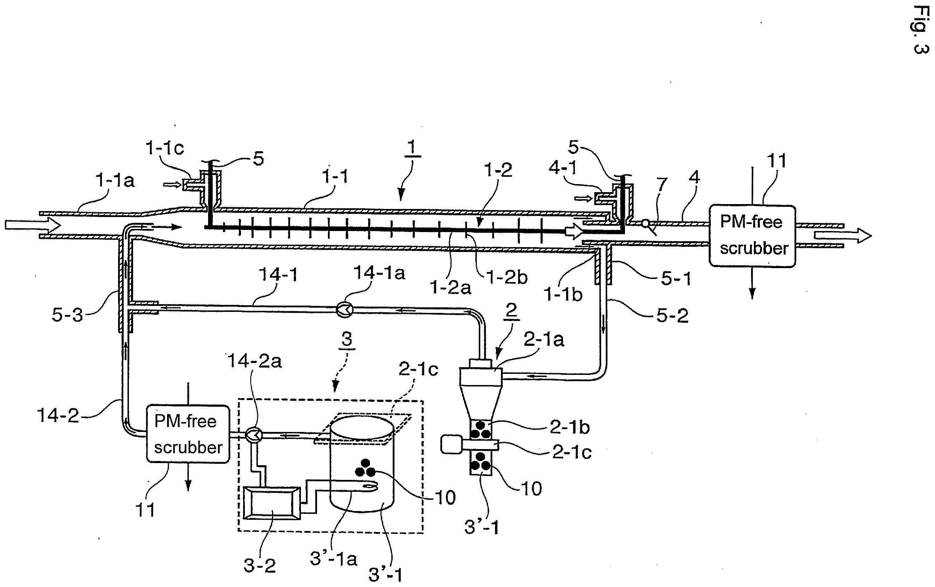

An exhaust gas treatment equipment for a marine diesel engine shown in Figure 3 as a device of a third example, has a configuration in which in the device of the second example shown in Figure 2, a PM-free scrubber 11, which is the same as the PM-free scrubber 11 installed in the PM-low-concentration exhaust gas introduction pipe 4, is installed in the recirculation pipe 14-2 for recirculating combustion exhaust gas from the PM burning unit 3 to the exhaust gas introduction pipe 1-1a of the electric precipitation unit 1.

That is, in the same manner as in the device of the second example shown in Figure 2, the configuration is provided with an discharge electrode 1-2 for charging particulate matters contained in exhaust gas of a marine diesel engine using low-quality fuel such as fuel oil or the like containing high-concentration sulfur components as its fuel; a tubular collection pipe 1-1 forming a precipitation electrode for collecting the charged particulate matters; and separating and collecting means 2-1 of a cyclone system for separating and collecting the particulate matters separated from the tubular collection pipe 1-1, and in this structure, a PM-free scrubber 11 that removes SOₓ contained in exhaust gas, but hardly removes any PM by utilizing difference in diffusion speeds between gas and particles is installed on the low-concentration exhaust gas delivery pipe 4 of PM 10 so that SOₓ is removed from the exhaust gas to be discharged to the atmosphere, and a cyclone collection means constituted by the same tangent-type cyclone 2-1a as described earlier is installed in the PM-high-concentration exhaust gas pipe 5-2 from the PM-high-concentration exhaust gas delivery unit 1-1b of PM installed near the inner peripheral surface on the downstream side of the tubular collection pipe 1-1, and a PM-high-concentration exhaust gas flow discharged from the PM-high-concentration exhaust gas delivery unit 1-1b is introduced into the tangent-type cyclone 2-1a so that large-diameter particles are collected and treated and an exhaust gas flow containing small-diameter particles that have not been removed by the same cyclone is pressure-fed and recirculated to the exhaust gas introduction pipe 1-1a via the recirculation pipe 14-1.

On the other hand, the PM burning unit 3 is designed such that a hopper 2-1b is installed right below a corn-shaped portion right below the lower portion of the tangent-type cyclone 2-1a, and right below the hopper, a stocker 3'-1 that has an inner capacity larger than that of the hopper 2-1b and also serves as the PM incinerator is installed, with a shutter 2-1c that holds PM precipitated and accumulated in the hopper and also allows the PM to drop down into the hopper being interposed therebetween. The stocker 3'-1 also serving as the PM incinerator is designed to have a built-in electric heater 3'-1a and control the burning temperature, the amount of intake air, the flow rate, or the like of the combustion exhaust gas by the controller 3-2. Additionally, in the case of the stocker 3'-1 also serving as the PM incinerator, when PM is precipitated and accumulated inside the hopper 2-1b to reach the hopper capacity limit, the shutter 2-1c is opened to allow the PM to drop down inside the stocker 3'-1 right below the hopper, and the shutter 2-1c is then closed to stock. A combustion exhaust gas from the stocker 3'-1 also serving as the PM incinerator is designed to be recirculated into the exhaust gas introduction pipe 1-1a of the electric precipitation unit 1 through the recirculation pipe 14-2. The device of the present example is designed to have a configuration in which a PM-free scrubber 11, which is the same as the PM-free scrubber 11 installed in the PM-low-concentration exhaust gas introduction pipe 4, is installed in the recirculation pipe 14-2. Reference numerals 14-1a and 14-2a respectively represent blowers for applying kinetic energy to exhaust gas flows respectively flowing through the recirculation pipes 14-1 and 14-2.

Additionally, in the same manner as in the device of the second example shown in Figure 2, the device in the present example also has a configuration in which the tip ends of the recirculation pipes 14-1 and 14-2 are made to protrude inside the exhaust gas introduction pipe 1-1a by taking an ejector effect into consideration, with the tip end openings being bent to be directed to the exhaust gas outflow direction. Moreover, it is needless to say that the stocker 3'-1 also serving as the PM incinerator may be prepared as an incinerator that uses a burner (not shown) in place of the electric heater 3'-1a.

In the case of an exhaust gas treatment equipment having a configuration shown in Figure 3, in addition to the same functions and effects as those of (A) to (G) of the device of the second example shown in Figure 2, by the PM-free scrubber 11 installed in the recirculation pipe 14-2 for recirculating combustion exhaust gas from the stocker 3'-1 also serving as the PM incinerator to the exhaust gas introduction pipe 1-1a, since sulfur components contained in the combustion exhaust gas can be preliminarily removed, an effect for reducing corrosiveness to the main body and cyclones can be obtained.

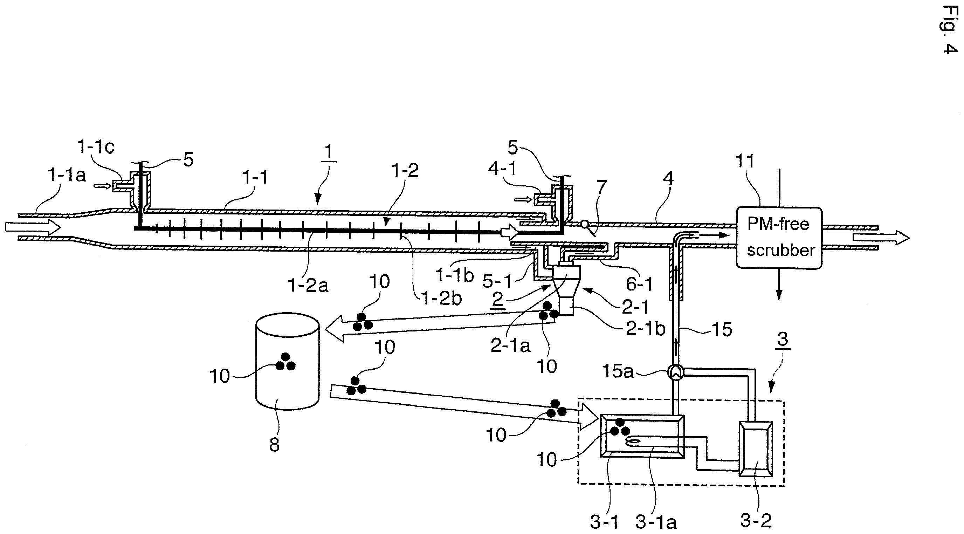

An exhaust gas treatment equipment for a marine diesel engine shown in Figure 4 as a device of a fourth example has a system in which a mixed flow of PM combustion exhaust gas and a low-concentration gas is supplied to a PM-free scrubber, and its configuration is made such that the recirculation pipe 12 of combustion exhaust gas from the PM incinerator 3-1 of the PM burning unit 3 of the device of first example shown in Figure 1 is allowed to protrude into an upstream side pipe of the PM-free scrubber 11 of the low-concentration exhaust gas introduction pipe 4 for PM 10.

That is, in the same manner as in the device of the first example shown in Figure 1, its configuration is provided with an discharge electrode 1-2 for charging particulate matters contained in exhaust gas of a marine diesel engine using low-quality fuel such as fuel oil or the like containing high-concentration sulfur components as its fuel, a tubular collection pipe 1-1 forming a precipitation electrode for collecting the charged particulate matters, and separating and collecting means 2-1 of a cyclone system for separating and collecting the particulate matters separated from the tubular collection pipe 1-1, and in this configuration, by installing a PM-free scrubber 11 that removes SOₓ contained in exhaust gas, but hardly removes any PM by utilizing difference in diffusion speeds between gas and particles in a low-concentration exhaust gas delivery pipe 4 for PM 10, SOₓ is removed from an exhaust gas to be discharged to the atmosphere, and a separating and collecting unit 2 formed on the downstream side of the electric precipitation unit 1 in the flowing direction of the exhaust gas is constituted by a cyclone collection means 2-1 serving as a separation means. This cyclone collection means 2-1 is constituted by a single tangent-type cyclone 2-1a connected to a PM-high-concentration exhaust gas delivery unit 1-1b of the collection pipe 1-1 through a communication pipe 5-1, and between the tangent-type cyclone 2-1a and the PM-low-concentration exhaust gas delivery pipe 4, an exhaust pipe 6-1 for use in joining a purified gas after having passed through the tangent-type cyclone 2-1a to a PM-low-concentration exhaust gas flowing the inside of the PM-low-concentration exhaust gas delivery pipe 4 is disposed, and in the PM-low-concentration exhaust gas delivery pipe 4, a flow-rate control dumper 7 for carrying out flow-rate adjustments on PM-high-concentration exhaust gas inflow rate and inflow speed into the tangent-type cyclone 2-1a and a PM-low-concentration exhaust gas discharge amount is installed.

In the same manner as in the unit shown in Figure 1, the PM burning unit 3 to be installed for burning PM is constituted by the PM incinerator 3-1 having a built-in electric heater 3-1a in which the burning temperature, the amount of intake air, the flow rate of the combustion exhaust gas, or the like, are controlled by the controller 3-2. In the device of the present example, a recirculation pipe 15 for use in recirculating combustion exhaust gas from the PM incinerator 3-1 to the upstream side of the PM-free scrubber 11 of the low-concentration exhaust gas delivery pipe 4 for PM 10 is installed. In the same manner as described above, the recirculation pipe 15 also has its tip end protruded into the PM-low-concentration exhaust gas delivery pipe 4. In the same manner as described earlier, reference numeral 15a represents a blower for applying kinetic energy to an exhaust gas flow flowing through the recirculation pipe 15.

In the case of the exhaust gas treatment equipment having a structure shown in Figure 4, in the same manner as in the device of the first example shown in Figure 1, in the tangent-type cyclone 2-1a, almost all the PM 10 is collected, and after having been temporarily stored in the hopper 2-1b, the PM 10 in the hopper 2-1b is further stored in the stocker 8 until the ship is brought into a state capable of carrying out a burning process of PM, and thereafter, the PM 10 is then supplied to the PM incinerator 3-1 of the PM burning unit 3, and the temperature is raised by controlling the electric heater 3-1a in the incinerator by the controller 3-2, the PM 10 is burned. A PM combustion exhaust gas containing high-concentration sulfur components generated upon burning the PM 10 is recirculated onto the upstream side of the PM-free scrubber 11 of the PM-low-concentration exhaust gas delivery pipe 4 through the recirculation pipe 15 to be mixed with the PM-low-concentration exhaust gas, and supplied to the PM-free scrubber 11. By the PM-free scrubber 11, an exhaust gas to be discharged to the atmosphere is formed into a gas from which sulfur components are removed although PM remains therein so that the atmospheric environment can be preserved. Additionally, since the treatment water from the PM-free scrubber 11 contains high-concentration sulfur components, but contains hardly any PM, the discharge into the ocean such as a scrubber through operation is possible, and the treatment can be carried out by using a small-sized treatment device with a small number of processes which is easily controlled. Moreover, by connecting the PM combustion exhaust gas recirculation pipe 15 to the PM-low-concentration exhaust gas delivery pipe 4, since corrosive PM combustion exhaust gas is prevented from flowing into the electric precipitation unit 1 and the separating and collecting unit 2, it is not necessary to use highly corrosion resistant materials for these members (collection pipe, electrode, or the like) and durability is easily ensured at low costs.

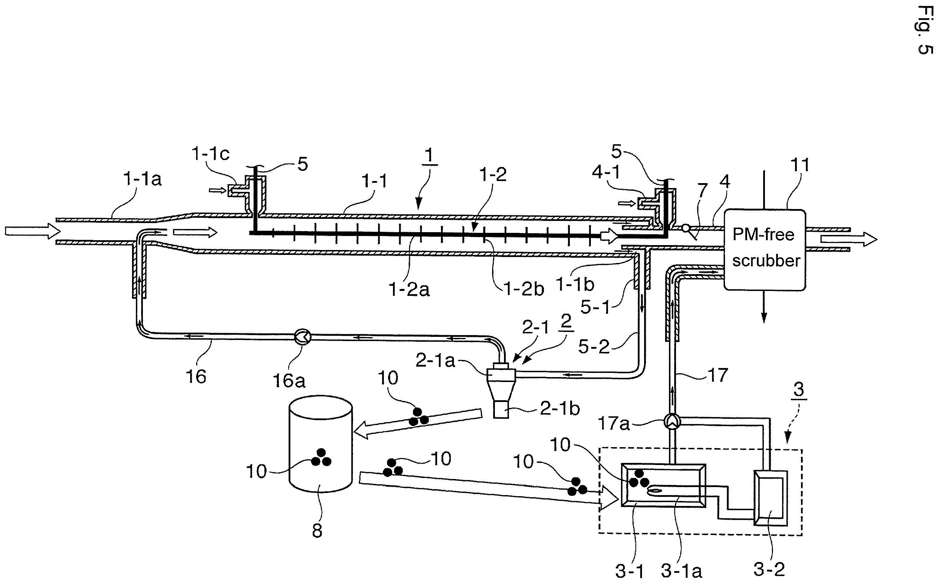

An exhaust gas treatment equipment for a marine diesel engine shown in Figure 5 as a device of a fifth example has a system in which PM combustion exhaust gas is directly supplied to the PM-free scrubber 11, and its configuration is made such that an discharge electrode 1-2 for charging particulate matters contained in exhaust gas of a marine diesel engine using low-quality fuel such as fuel oil or the like containing high-concentration sulfur components as its fuel and a tubular collection pipe 1-1 forming a precipitation electrode for collecting the charged particulate matters are installed, and separating and collecting means 2-1 of a cyclone system for separating and collecting the particulate matters separated from the tubular collection pipe 1-1 is further installed, and in this configuration, by installing a PM-free scrubber 11 that removes SOₓ contained in exhaust gas, but hardly removes any PM by utilizing difference in diffusion speeds between gas and particles in a low-concentration exhaust gas delivery pipe 4 for PM 10, SOₓ is removed from an exhaust gas to be discharged to the atmosphere, and a separating and collecting unit 2, formed on the downstream side of the electric precipitation unit 1 in the flowing direction of the exhaust gas, is constituted by the cyclone collection means 2-1 serving as a separation means. This cyclone collection means 2-1 is constituted by a single tangent-type cyclone 2-1a that is connected to the PM-high-concentration exhaust gas delivery unit 1-1b of the collection pipe 1-1 through a communication pipe 5-1 and a PM-high-concentration exhaust gas pipe 5-2 so that by introducing a PM-high-concentration exhaust gas flow discharged by the PM-high-concentration exhaust gas delivery unit 1-1b into the tangent-type cyclone 2-1a, large-diameter particles are collected and treated, and an exhaust gas flow containing small-diameter particles that have not been removed in the same cyclone is pressure-fed and recirculated to the exhaust gas introduction pipe 1-1a via the recirculation pipe 16. Reference numeral 16a represents a blower for applying kinetic energy to an exhaust gas flow flowing through the recirculation pipe 16. Moreover, in the same manner as in the aforementioned case, a PM burning unit 3 installed to burn the PM is constituted by a PM incinerator 3-1 having a built-in electric heater 3-1a in which the burning temperature, the amount of intake air, the flow rate of the combustion exhaust gas, or the like are controlled by a controller 3-2. The device of the present example is mainly characterized in that a recirculation pipe 17, which directly supplies combustion exhaust gas from the PM incinerator 3-1 to the PM-free scrubber 11 installed in the PM-low-concentration exhaust gas delivery pipe 4, is installed. Reference numeral 17a represents a blower for applying kinetic energy to an exhaust gas flow flowing inside the recirculation pipe 17, in the same manner as described earlier.

In the case of the exhaust gas treatment equipment having a configuration shown in Figure 5, almost all the PM 10 is collected by the tangent-type cyclone 2-1a, and after having been temporarily stored in the hopper 2-1b, the PM 10 inside the hopper 2-1b is further stored in the stocker 8 until the ship is brought into a state capable of carrying out a burning process of PM, and is then supplied to the PM incinerator 3-1 of the PM burning unit 3, and by controlling the electric heater 3-1a in the incinerator by the controller 3-2 to raise the temperature of the electric heater 3-1a, the PM 10 is burned. A PM combustion exhaust gas containing high-concentration sulfur components generated upon burning the PM 10 is directly supplied into the PM-free scrubber 11 through the recirculation pipe 17. The PM-low-concentration exhaust gas and the PM combustion exhaust gas supplied to the PM-free scrubber 11 are formed into a gas from which sulfur components are removed although PM remains therein so that the atmospheric environment can be preserved. Additionally, since the treatment water from the PM-free scrubber 11 contains high-concentration sulfur components, but contains hardly any PM, the discharge into the ocean such as a scrubber-through operation or the like is possible, and the treatment can be carried out by using a small-sized treatment device with a small number of processes which is easily controlled. Moreover, corrosive PM combustion exhaust gas is prevented from flowing into the electric precipitation unit 1 and the separating and collecting unit 2, it is not necessary to use highly corrosion resistant materials for these members (collection pipe, electrode, or the like) and durability is easily ensured at low costs.

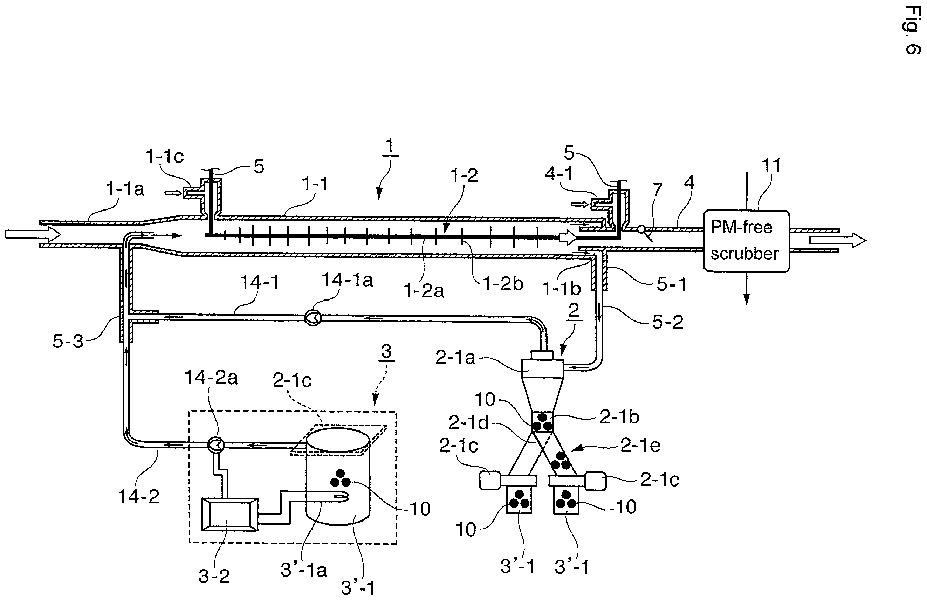

An exhaust gas treatment equipment for a marine diesel engine, shown in Figure 6 as a device of a sixth example, has a configuration in which a plurality of stockers also serving as PM incinerators described in the device of the second example shown in Figure 2 are installed so that PM alternate collections and alternate burning operations can be carried out.

That is, in the same manner as in the device of the second example shown in Figure 2, the device in accordance with the present example is provided with an discharge electrode 1-2 for charging particulate matters contained in exhaust gas of a marine diesel engine using low-quality fuel such as fuel oil or the like containing high-concentration sulfur components as its fuel, a tubular collection pipe 1-1 forming a precipitation electrode for collecting the charged particulate matters are installed, and separating and collecting means 2-1 of a cyclone system for separating and collecting the particulate matters separated from the tubular collection pipe 1-1 is further installed, and by installing a PM-free scrubber 11 that removes SOₓ contained in exhaust gas, but hardly removes any PM by utilizing difference in diffusion speeds between gas and particles in a low-concentration exhaust gas delivery pipe 4 for PM 10, SOₓ is removed from an exhaust gas to be discharged to the atmosphere, and in this configuration, a cyclone collection means constituted by the same tangent-type separating and collecting unit 2-1a described earlier, is formed on the high-concentration exhaust gas pipe 5-2 from the PM-high-concentration exhaust gas delivery unit 1-1b of PM formed near the inner peripheral surface on the downstream side of the tubular collection pipe 1-1, so that by introducing a PM-high-concentration exhaust gas flow discharged from the PM-high-concentration exhaust gas delivery unit 1-1b into the tangent-type cyclone 2-1a, large-diameter particles are collected and treated, and an exhaust gas flow containing small diameter particles that have not been removed by the same cyclone is pressure-fed and recirculated to the introduction pipe 1-1a through the recirculation pipe 14-1.

On the other hand, the PM burning unit 3 has a configuration in which a multiple branch pipe 2-1e that has a built-in switching valve 2-1d and has a two forked portion or the like is installed on a hopper 2-1b right below a cone-shaped portion of a lower portion of the tangent-type cyclone 2-1a, and at each of the lower ends of the multiply branched portions of the multiple branch pipe 2-1e, a stocker 3'-1 having an inner capacity larger than that of the hopper 2-1b and also serving a PM incinerator is provided, with a shutter 2-1c for holding PM precipitated and accumulated inside the hopper 2-1b and for allowing the PM to drop down being interposed therebetween. The stocker 3'-1 also serving as the PM incinerator has a built-in electric heater 3'-1a inside thereof, and is designed to control the burning temperature, the amount of intake air, the flow rate of the combustion exhaust gas, etc. by using the controller 3-2. Additionally, in the case of the stocker 3'-1 also serving as the PM incinerator, PM is precipitated and accumulated inside the hopper 2-1b, and upon reaching the hopper capacity limit, the shutter 2-1c is opened so that the PM is allowed to drop down into the stocker 3'-1 right below the hopper, and thereafter, the shutter 2-1c is closed to stock. A combustion exhaust gas from the stocker 3-1 also serving as the PM incinerator is designed to be recirculated into the exhaust gas introduction pipe 1-1a of the electric precipitation unit 1 through the recirculation piping 14-2.

Additionally, in the same manner as in the device of the second example shown in Figure 2, the device of the present example also has the tip ends of the recirculation pipes 14-1 and 14-2 protruded into the exhaust gas introduction pipe 1-1a, with the tip end openings being bent to be directed to the exhaust gas outflow direction, by taking an ejector effect into consideration. Moreover, it is needless to say that the stocker 3'-1 also serving as the PM incinerator may be prepared as an incinerator that uses a burner (not shown) in place of the electric heater 3'-1a.

In the case of the exhaust gas treatment equipment having a configuration shown in Figure 6, in addition to the same functions and effects (A) to (G) as those of the device of the second example shown in Figure 2, by providing the stocker also serving as the PM incinerator to carryout PM alternate collecting process and alternate burning process using the switching valve 2-1d, the resulting effects that not only burning the PM efficiently, but also capable of carrying out a continuous operation without stopping the operation even a failure or the like occurs in one of the stockers, can be obtained.

### Reference Signs List

1...electric precipitation unit
1-1...collection pipe
1-1a...exhaust gas introduction pipe
1-1b...PM-high-concentration exhaust gas delivery unit
1-1c, 4-1...seal air introduction pipe unit
1-2...discharge electrode
1-2a...main electrode
1-2b...electrode needle
2...separating and collecting unit
2-1...cyclone collection means
2-1a...tangent-type cyclone
2-1b...hopper
2-1c...shutter
2-1d...switching valve
2-1e...multiple branch pipe
3...PM burning unit
3-1...PM incinerator
3-1a, 3'-1a...electric heater
3'-1...stocker also serving as PM incinerator
3-2...controller
4...PM-low-concentration exhaust gas delivery pipe
5...support member
5-1, 5-3...communication pipe
5-2...PM-high-concentration exhaust gas pipe
6-1...exhaust pipe
7...flow rate control dumper
8...stocker
11...PM-free scrubber
10...PM
12, 14-1, 14-2, 15, 16, 17...recirculation pipe
12a, 14-1a, 14-2a, 15a, 16a, 17a...blower
20...exhaust gas cooler

## Claims

1. An exhaust gas treatment equipment for a marine diesel engine using low-quality fuel such as fuel oil containing high-concentration sulfur components, the exhaust gas treatment equipment comprising:
an electric precipitation means having a tubular collection unit with a predetermined length, the tubular collection unit being composed of a discharge electrode for charging particulate matters contained in exhaust gas from the engine and a precipitation electrode for collecting the particulate matters charged, the discharge electrode having a main electrode disposed inside the tubular collection unit in a pipe axial direction and a plurality of electrodes that radially protrude and are disposed on the main electrode with predetermined intervals;
a PM-low-concentration exhaust gas delivery pipe and a PM-high-concentration exhaust gas delivery pipe;
a PM-free scrubber installed in the PM-low-concentration exhaust gas delivery pipe;
a precipitation means for separating and collecting the particulate matters detached from the tubular collection unit by using a cyclone for precipitation;
a burning device for burning PM precipitated by the precipitation means; and
a recirculation pipe for recirculating combustion exhaust gas generated in the burning device to the collection unit or an exhaust pipe disposed on an upstream side of the collection unit,
wherein the recirculation pipe is disposed between the burning device and the exhaust pipe disposed on an upstream side of a collection pipe or the upstream side of the collection unit.

2. The exhaust gas treatment equipment for a marine diesel engine using low-quality fuel such as fuel oil containing high-concentration sulfur components according to claim 1, wherein the recirculation pipe is disposed so as to recirculate combustion exhaust gas from the burning device to an upstream side of the PM-free scrubber installed in the PM-low-concentration exhaust gas delivery pipe.

3. The exhaust gas treatment equipment for a marine diesel engine using low-quality fuel such as fuel oil containing high-concentration sulfur components according to claim 1 or 2, wherein the recirculation pipe from the cyclone for precipitation and the combustion exhaust gas recirculation pipe are connected to each other.

4. The exhaust gas treatment equipment for a marine diesel engine using low-quality fuel such as fuel oil containing high-concentration sulfur components according to any one of claims 1 to 3, wherein a lower portion of the cyclone for precipitation is used as a PM storing stocker, and the PM burning device is integrally attached to the lower portion of the stocker, with a shutter interposed therebetween.
